(19) **Europäisches Patentamt**

**European Patent Office**

**Office européen des brevets**

(11) **EP 0 987 076 A2**

(12) **EUROPÄISCHE PATENTANMELDUNG**

(43) Veröffentlichungstag:
22.03.2000 Patentblatt 2000/12

(51) Int. Cl.⁷: **B23B 51/02**

(21) Anmeldenummer: **99117463.2**

(22) Anmeldetag: **09.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **14.09.1998 DE 19841978**

(71) Anmelder:
**Gebrüder Heller Dinklage GmbH
49413 Dinklage (DE)**

(72) Erfinder: **Heinrich, Kersten
27283 Verden (DE)**

(74) Vertreter: **Winkler, Andreas, Dr.
FORRESTER & BOEHMERT
Franz-Joseph-Strasse 38
80801 München (DE)**

(54) **Bohrer**

(57) Bohrer, mit einem Bohrerkopf, einem Bohrerschaft (10), der eine durch mindestens zwei spiralförmige Spannuten (16,18) und zwischen den Spannuten befindliche Stege (20,22) gebildete Förderwendel aufweist, und einem dem Bohrerkopf gegenüberliegenden Einsteckende (12), wobei zwei Spannuten zumindest im Bereich des dem Bohrerkopf zugekehrten Endes des Bohrerschaftes gleiche lichte Querschnitte aufweisen und unter einem Winkel α im Bereich von 130° bis 170° zueinander angeordnet sind.

Fig.1

EP 0 987 076 A2

**Beschreibung**

Die vorliegende Erfindung betrifft einen Bohrer. Dabei kann es sich sowohl um einen Gesteins- als auch Holz-, Metall- oder Mehrzweckbohrer handeln.

Dem Spiral- oder auch Wendelbohrer kommt unter den Bohrwerkzeugen die größte Bedeutung zu, denn er gilt als wichtigstes Werkzeug zum Herstellen zylindrischer Löcher aus dem Vollen oder zum Vergrößern eines vorgegebenen Lochdurchmessers beim Aufbohren. Sein Anteil an der spanenden Fertigung wird auf 20 bis 25% geschätzt, und er ist heute das in den größten Stückzahlen erzeugte und am weitesten verbreitende spanende Werkzeug. Vereinfachend gesehen setzt sich der Spiralbohrer aus einem Bohrerkopf, einem Bohrschaft, der eine Förderwendel aufweist, und einem Einsteckende zusammen. Eine sogenannte „zweigängige" Förderwendel wird durch zwei um 180° versetzt angeordnete Spannuten gebildet. Derartig gestaltete zweigängige Förderwendeln können beim Bohren knicken und zu unstabilem Bohrverhalten führen.

Der Erfindung liegt somit die Aufgabe zugrunde, einen Bohrer mit einer höheren Stabilität im Förderwendelbereich bereitzustellen.

Erfindungsgemäß wird diese Aufgabe gelöst durch Bohrer, mit einem Bohrerkopf, einem Bohrerschaft, der eine durch mindestens zwei spiralförmige Spannuten und zwischen den Spannuten befindliche Stege gebildete Förderwendel aufweist, und einem dem Bohrerkopf gegenüberliegenden Einsteckende, wobei zwei Spannuten zumindest im Bereich des dem Bohrerkopfzugekehrten Endes des Bohrerschaftes gleiche lichte Querschnitte aufweisen und unter einem Winkel α im Bereich von 130° bis 170° zueinander angeordnet sind.

Dabei kann vorgesehen sein, daß das Verhältnis zwischen der Breite B1 der Rückenfläche eines ersten Steges in Längsrichtung der Förderwendel zu der Breite B2 der Rückenfläche eines zweiten Steges in Längsrichtung der Förderwendel 1:2 beträgt.

Insbesondere kann dabei vorgesehen sein, daß der erste Steg an dem dem Bohrerkopf zugekehrten Ende des Bohrerschaftes in eine mit der Bohrlochwandung zusammenwirkende Rückenfläche übergeht, die sich über eine Strecke S1 = B1 in Umfangsrichtung des Bohrers erstreckt, und der zweite Steg an dem dem Bohrerkopf zugekehrten Ende des Bohrerschaftes in eine mit der Bohrlochwandung zusammenwirkende Rückenfläche übergeht, die sich über eine Strecke S2 = B2 in Umfangsrichtung des Bohrers erstreckt.

Gemäß einer weiteren besonderen Ausführungsform der Erfindung kann vorgesehen sein, daß die Steigung h1 einer ersten Spannut der Steigung h2 einer zweiten Spannut entspricht. Dadurch bleibt der Winkel über die gesamte Länge der Förderwendel konstant.

Andererseits kann auch vorgesehen sein, daß die Steigung h1 der ersten Spannut von der Steigung h2 der zweiten Spannut verschieden ist. Damit lassen sich die Breiten der Spannuten variieren.

Es kann auch vorgesehen sein, daß mindestens eine der Steigungen h1, h2 der ersten und zweiten Spannuten über die Länge der Förderwendel variiert. Damit lassen sich ebenfalls die Breiten der Spannuten variieren.

Schließlich kann vorgesehen sein, daß die Tiefe mindestens einer Spannut über die Länge der Förderwendel variiert. Eine Variation der Nuttiefe führt zu einer Variation des Bohrerschaftkernes. Dies führt zu einem gegenüber Förderwendeln mit demselben Außendurchmesser größeren Spannuttransportquerschnitt, der das speziell bei kleineren Bohrerabmessungen mit hohen Bohrfortschritten auftretende Problem des Verstopfens reduziert/ausschließt. Auch lassen sich hiermit die Breiten der Spannuten variieren.

Der Erfindung liegt die überraschende Erkenntnis zugrunde, daß durch die asymmetrische (d.h. nicht diametral gegenüberliegende) Anordnung der Spannuten Stege mit verschieden großen Rückenflächen entstehen, die der Förderwendel und somit dem Gesamtsystem eine höhere Knickfestigkeit verleihen. Wie sich anhand einer Belastungsanalyse des mehrachsigen Spannungs- und Schlagenergietransportzustandes an Prototypen herausgestellt hat, weisen die erfindungsgemäßen Bohrer gegenüber im Stand der Technik bekannten Bohrern mit Spannuten mit dem gleichen Transportquerschnitt im einzelnen die folgenden Vorteile auf:

     1. höhere Stabilität (höhere Knickfestigkeit) bei ansonsten gleichen Parametern

     2. besserer Schlagenergietransport (höhere dynamische Knickfestigkeit unter Last der drauf einwirkenden Impulse) bei ansonsten gleichen Parametern

     3. vorteilhafteres Schwingungsverhalten bei ansonsten gleichen Parametern

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:

Fig. 1       eine Seitenansicht einer besonderen Ausführungsform des erfindungsgemäßen Bohrers, bei der der Übersichtlichkeit halber der Bohrerkopf und das Einsteckende weggelassen sind;

Fig. 2       eine Querschnittsansicht entlang der Linie II-II in Fig. 1;

Fig. 3a       eine Querschnittsansicht entlang der Linie III-III von Fig. 1; und

Fig. 3b eine zu der in Fig. 3a entsprechende Querschnittsansicht durch einen Bohrer im Stand der Technik.

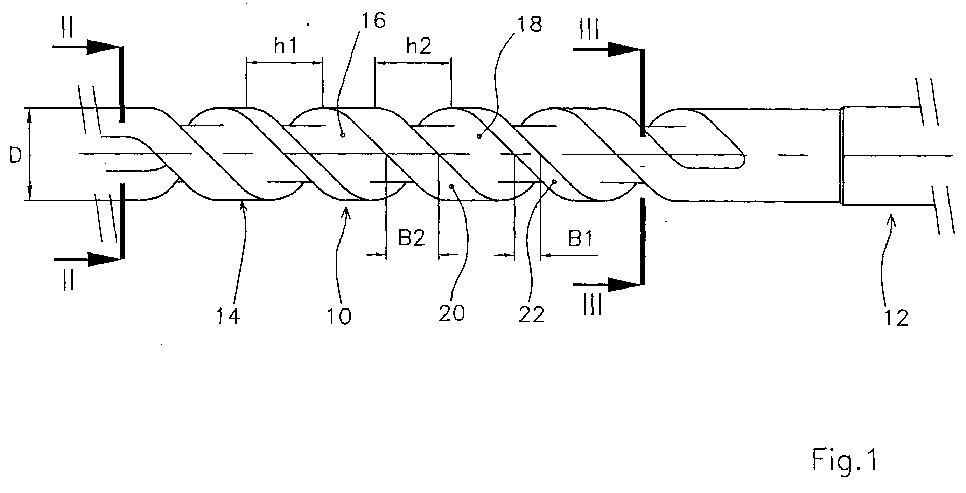

Fig. 1 zeigt eine Seitenansicht einer besonderen Ausführungsform des erfindungsgemäßen Bohrers, bei der der Übersichtlichkeit halber der Bohrerkopf und das Einsteckende weggelassen sind. Der Bohrer umfaßt neben dem nicht gezeigten Bohrerkopf, der sich auf der linken Seite der Darstellung befinden würde, einen Bohrerschaft 10 und ein nur angedeutetes Einsteckende 12. Der Bohrerschaft 10 weist eine zweigängige Förderwendel 14 mit einem Durchmesser D auf, die aus ersten und zweiten Spannuten 16 und 18 sowie zwischen den Spannuten 16 und 18 befindlichen ersten und zweiten Stegen 22 und 20 gebildet wird. Der zweite Steg 20 weist eine Breite B2 und der erste Steg 22 weist eine Breite B1 auf, wobei die Breiten B1 und B2 in Längsrichtung der Förderwendel 14 gemessen sind und für das Verhältnis der Breiten B1 zu B2 gilt:

$$B2 = 2 \times B1.$$

Für die Steigung h1 der ersten Spannut 16 und die Steigung h2 der zweiten Spannut 18 gilt:

$$h1 = h2.$$

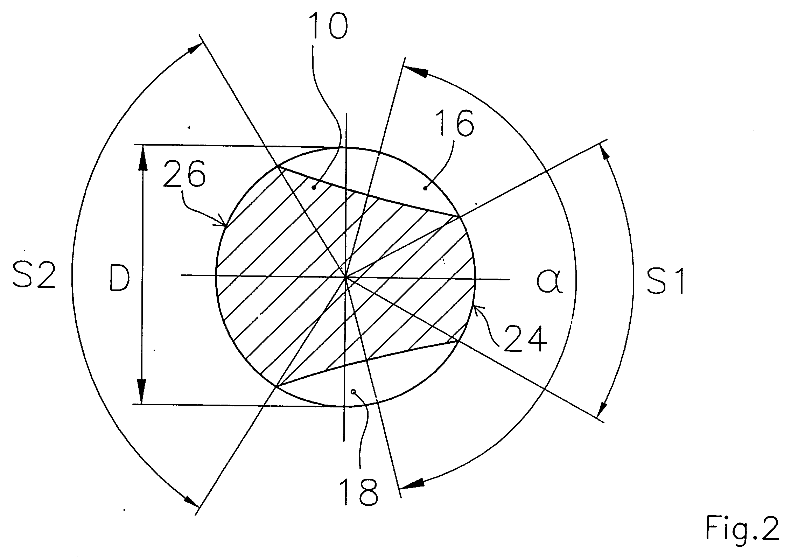

Fig. 2 zeigt eine Querschnittsansicht entlang der Linie II-II von Fig. 1. Wie der Darstellung zu entnehmen ist, weisen die ersten und zweiten Spannuten 16 und 18 im Bereich des dem Bohrerkopf zugekehrten Endes des Bohrerschaftes 10 gleiche lichte Querschnitte auf und sind sie unter einem Winkel $\alpha$ von 150° zueinander angeordnet. Weiterhin geht der erste Steg 22 an dem dem Bohrerkopf zugekehrten Ende des Bohrerschaftes 10 in eine mit der Bohrlochwandung zusammenwirkende Rückenfläche 24 über, die sich über eine Strecke S1 = B1 in Umfangsrichtung des Bohrers erstreckt, und der zweite Steg 20 an dem dem Bohrerkopf zugekehrten Ende des Bohrerschaftes 10 in eine mit der Bohrlochwandung zusammenwirkende Rückenfläche 26 über, die sich über eine Strecke S2 = B2 in Umfangsrichtung erstreckt.

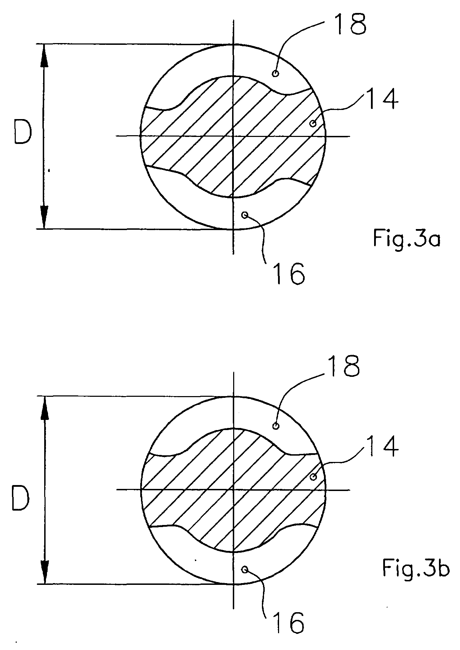

Fig. 3a zeigt eine Querschnittsansicht entlang der Linie III-III von Fig. 1 und Fig. 3b eine zu der in der Fig. 3a entsprechende Querschnittsansicht eines Bohrers im Stand der Technik. Während bei einem Bohrer im Stand der Technik mit einer zweigängigen Förderwendel, bei der die erstem und zweiten Spannuten diametral gegenüber angeordnet sind, die ersten und zweiten Spannuten 16 und 18 auch an der in Fig. 1 gezeigten Stelle unverändert diametral gegenüberliegend angeordnet sind (Fig. 3b), sind die ersten und zweiten Spannuten 16 und 18 bei der besonderen Ausführungsform des erfindungsgemäßen Bohrers weiterhin unter einem Winkel von 150° zueinander angeordnet (Fig. 3a). Unter Berücksichtigung, daß der Querschnitt räumlich gedrallt wird, wird bei dem erfindungsgemäßen Bohrer ein höheres Widerstandsmoment in einer umlaufenden Richtung und somit eine höhere Knickfestigkeit gewährleistet, die zur Stabilisierung des gesamten Bohrers beiträgt.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Bezugszeichenliste**

| | |
|---|---|
| 10 | Bohrerschaft |
| 12 | Einsteckende |
| 14 | Förderwendel |
| 16 | erste Spannut |
| 18 | zweite Spannut |
| 20 | zweite Steg |
| 22 | erster Steg |
| 24, 26 | Rückenfläche |
| B1, B2 | Breite der Rückenfläche 24 bzw. 26 |
| S1, S2 | Strecke |
| h1, h2 | Steigung der Spannut 16 bzw. 18 |
| $\alpha$ | Winkel zwischen benachbarten Spannuten |

**Patentansprüche**

1. Bohrer, mit einem Bohrerkopf, einem Bohrerschaft (10), der eine durch mindestens zwei spiralförmige Spannuten (16, 18) und zwischen den Spannuten befindliche Stege (20, 22) gebildete Förderwendel (14) aufweist, und einem dem Bohrerkopf gegenüberliegenden Einsteckende, wobei zwei Spannuten (16, 18) zumindest im Bereich des dem Bohrerkopf zugekehrten Endes des Bohrerschaftes (10) gleiche lichte Querschnitte aufweisen und unter einem Winkel $\alpha$ im Bereich von 130° bis 170° zueinander angeordnet sind.

2. Bohrer nach Anspruch 1, dadurch gekennzeichnet, daß das Verhältnis zwischen der Breite B1 der Rükkenfläche eines ersten Sieges (22) in Längsrichtung der Förderwendel (14) zu der Breite B2 der Rückenfläche eines zweiten Steges (20) in Längsrichtung der Förderwendel (14) 1:2 beträgt.

3. Bohrer nach Anspruch 2, dadurch gekennzeichnet, daß der erste Steg (22) an dem dem Bohrerkopf zugekehrten Ende des Bohrerschaftes (10) in eine mit der Bohrlochwandung zusammenwirkende Rückenfläche (24) übergeht, die sich über eine Strecke S1 = B1 in Umfangsrichtung des Bohrers erstreckt, und der zweite Steg (20) an dem dem Bohrerkopf (10) zugekehrten Ende des Bohrerschaftes in eine mit der Bohrlochwandung zusammenwirkende Rückenfläche (26) übergeht, die sich über eine Strecke S2 = B2 in Umfangsrichtung des Bohrers erstreckt.

4. Bohrer nach einem der Ansprüche 1 bis 3, dadurch gekennzeichnet, daß die Steigung h1 einer ersten Spannut (16) der Steigung h2 einer zweiten Spannut (18) entspricht.

5. Bohrer nach einem der Ansprüche 1 bis 3, dadurch gekennzeichnet, daß die Steigung h1 der ersten Spannut (16) von der Steigung h2 der zweiten Spannut (18) verschieden ist.

6. Bohrer nach einem der Ansprüche 1 bis 3, dadurch gekennzeichnet, daß mindestens eine der Steigungen h1, h2 der ersten und zweiten Spannuten (16, 18) über die Länge der Förderwendel (14) variiert.

7. Bohrer nach einer der Ansprüche 1 bis 4, dadurch gekennzeichnet, daß die Tiefe mindestens einer Spannut über die Länge der Förderwendel (14) variiert.

Fig.1

EP 0 987 076 A2

Fig.2

EP 0 987 076 A2

Fig.3a

Fig.3b